# EUROPEAN PATENT APPLICATION

(11) **EP 4 752 682 A1**
(43) Date of publication of application: **03.06.2026**
(21) Application number: 24860189.0
(22) Date of filing: 23.07.2024
(51) Int. Cl.: G06F 1/3203, G06F 1/28, H02J 7/00

(54) **ELECTRONIC DEVICE FOR POWER CONTROL, OPERATION METHOD THEREOF, AND STORAGE MEDIUM**

(30) Priority: 30.08.2023 KR 20230114688; 13.10.2023 KR 20230136603
(71) Applicant: Samsung Electronics Co., Ltd., Suwon-si, Gyeonggi-do 16677 (KR)
(72) Inventor: SHIN, Woonshik, Suwon-si Gyeonggi-do 16677 (KR)
(74) Representative: Gulde & Partner
(86) International application number: PCT/KR2024/010614
(87) International publication number: WO 2025/048268

(57) **Abstract**

According to an embodiment, an electronic device (101, 201) may comprise: a battery (189, 419); a first connector (405) to which a first external power supply device may be connected; a second connector (406) to which a second external power supply device may be connected: a charging circuit (418) configured to supply, to the battery, power received using at least one of the first connector and the second connector; and a control circuit (120, 414, 420). According to an embodiment, the control circuit may be configured to: if a connection of the first external power supply device is detected via the first connector, identify first power information of the first external power supply device; at least on the basis of the first power information, control the first external power supply device to supply power to the charging circuit via the first connector at a first voltage; while the power is being received at the first voltage via the first connector, if a connection of the second external power supply device is detected via the second connector, identify second power information of the second external power supply device; determine a power ratio between the first external power supply device and the second external power supply device on the basis of the first power information and the second power information; and adjust an output voltage of at least one of the first external power supply device and the second external power supply device so that a ratio between a first amount of power supplied from the first external power supply device and a second amount of power supplied from the second external power supply device corresponds to the determined power ratio.

## Description

### [Technical Field]

An embodiment of the disclosure relates to an electronic device for controlling power, a method of operating the same, and a storage medium.

### [Background Art]

An electronic device may be connected to various external devices, and may receive data from an external device or transmit data to an external device. In addition, the electronic device may receive power from an external device, or transmit power to an external device. Such an electronic device may include an interface (e.g., a connector) for a connection with an external device, may be connected to various external devices through the interface, and may provide an extended function through the connection with the external device. The electronic device may include various types of connectors according to various interfaces.

Through a connector used for charging or inputting/outputting data, the electronic device may be electrically connected to an external power supply device that charges power of the electronic device. For example, a universal serial bus (USB) type C is a connector of an electronic device, and may be connected to an external power supply device (e.g., a charging adapter or a charger) through a connector of USB type C to receive power and to be charged.

The information may be provided as the related art to help understanding of the disclosure. Any opinion or decision on whether the above-mentioned content can be applied as the prior art related to the disclosure has been not provided.

### [Detailed Description of the Invention]

### [Technical Solution]

According to an embodiment, an electronic device 101 or 201 may include a battery 189 or 419, a first connector 405 to which a first external power supply device is connectable, a second connector 406 to which a second external power supply device is connectable, a charging circuit 418 configured to supply power received using at least one of the first connector and the second connector to the battery, and a control circuit 120, 414, or 420.

According to an embodiment, the control circuit may be configured to, when a connection of the first external power supply device is detected through the first connector, identify first power information of the first external power supply device.

According to an embodiment, the control circuit may be configured to, based on at least the first power information, control the first external power supply device to supply power to the charging circuit at a first voltage through the first connector.

According to an embodiment, the control circuit may be configured to, when a connection of the second external power supply device is detected through the second connector while the power is supplied at the first voltage through the first connector, identify second power information of the second external power supply device.

According to an embodiment, the control circuit may be configured to, based on the first power information and the second power information, determine a power ratio between the first external power supply device and the second power supply device.

According to an embodiment, the control circuit may be configured to adjust an output voltage of at least one of the first external power supply device and the second external power supply device such that a ratio between a first power amount supplied from the first external power supply device and a second power amount supplied from the second external power supply device corresponds to the determined power ratio.

According to an embodiment, a method of controlling power by an electronic device 101 or 201 may include, when a connection of a first external power supply device is detected through a first connector 405 to which the first external power supply device is connectable, identifying first power information of the first external power supply device.

According to an embodiment, the method may include, based on at least the first power information, controlling the first external power supply device to supply power at a first voltage through the first connector,.

According to an embodiment, the method may include, when a connection of a second external power supply device is detected through a second connector 406 to which the second external power supply device is connectable while the power is supplied at the first voltage through the first connector, identifying second power information of the second external power supply device.

According to an embodiment, the method may include, based on the first power information and the second power information, determining a power ratio between the first external power supply device and the second power supply device.

According to an embodiment, the method may include adjusting an output voltage of at least one of the first external power supply device and the second external power supply device such that a ratio between a first power amount supplied from the first external power supply device and a second power amount supplied from the second external power supply device corresponds to the determined power ratio.

According to an embodiment, a computer-readable storage medium storing at least one instruction is provided. The at least one instruction may, when executed by at least one processor 120 or 420 of an electronic device 101 or 201, cause the electronic device to perform at least one operation. The at least one operation may include, when a connection of a first external power supply device is detected through a first connector 405 to which the first external power supply device is connectable, identifying first power information of the first external power supply device.

According to an embodiment, the at least one operation may include, based on the first power information, controlling the first external power supply device to supply power at a first voltage through the first connector.

According to an embodiment, the at least one operation may include, when a connection of a second external power supply device is detected through a second connector 406 to which the second external power supply device is connectable while the power is supplied at the first voltage through the first connector, identifying second power information of the second external power supply device.

According to an embodiment, the at least one operation may include, based on the first power information and the second power information, determining a power ratio between the first external power supply device and the second power supply device.

According to an embodiment, the at least one operation may include adjusting an output voltage of at least one of the first external power supply device and the second external power supply device such that a ratio between a first power amount supplied from the first external power supply device and a second power amount supplied from the second external power supply device corresponds to the determined power ratio.

### [Brief Description of Drawings]

FIG. 1 is a block diagram illustrating an electronic device within a network environment according to an embodiment.
FIG. 2 is a perspective view of an electronic device supporting a plurality of connectors according to an embodiment.
FIG. 3A is a diagram illustrating an operation when an external power supply device of second rated power lower than first rated power is coupled in a state where an external power supply device of the first rated power is coupled with an electronic device according to an embodiment.
FIG. 3B is a diagram illustrating an operation when an external power supply device of the same rated power as the first rated power is coupled to the electronic device in a state where an external power supply device with the first rated power is coupled to the electronic device, according to an embodiment.
FIG. 4A is an internal block diagram illustrating an electronic device including a plurality of connectors according to an embodiment.
FIG. 4B is a circuit diagram of an internal block diagram of the electronic device of FIG. 4A.
FIG. 5 is a flowchart illustrating an operation of an electronic device for power control according to an embodiment.
FIG. 6 is a flowchart illustrating an operation of an electronic device for adjusting an output voltage of an external power supply device, according to an embodiment.
FIG. 7 is a flowchart illustrating an operation of an electronic device for protecting an external power supply device with a low rated power amount according to an embodiment.
FIG. 8A is a measurement table for illustrating a method of adjusting an output voltage of an external power supply device upward according to an embodiment.
FIG. 8B is a measurement table for illustrating a method of adjusting an output voltage of an external power supply device downward according to an embodiment.
FIG. 9 is a flowchart illustrating an operation of an electronic device for adjusting an output voltage of an external power supply device in a specified unit according to an embodiment.
FIG. 10 is a flowchart illustrating an operation of an electronic device for adjusting an output voltage of an external power supply device when a rated power amount is the same, according to an embodiment.
FIG. 11 is an internal block diagram illustrating an electronic device for power control using a buck-boost converter when output voltages of external power supply devices are different, according to an embodiment.
FIG. 12 is an internal block diagram illustrating an electronic device for power control when power is supplied from an external power supply device in different ways according to an embodiment.

In connection with a description of drawings, the same or similar reference numerals may be used for the same or similar elements.

### [Mode for Carrying out the Invention]

Hereinafter, embodiments of the disclosure are described in detail to allow those skilled in the art to which the disclosure belongs to easily implement the disclosure with reference to the drawings. However, the disclosure may be implemented in various different forms and is not limited to embodiments described herein. In connection with description of the drawings, the same or similar reference numerals can be used for the same or similar elements. Furthermore, in drawings and relevant description, description of well-known functions and configurations may be omitted for clarity and brevity.

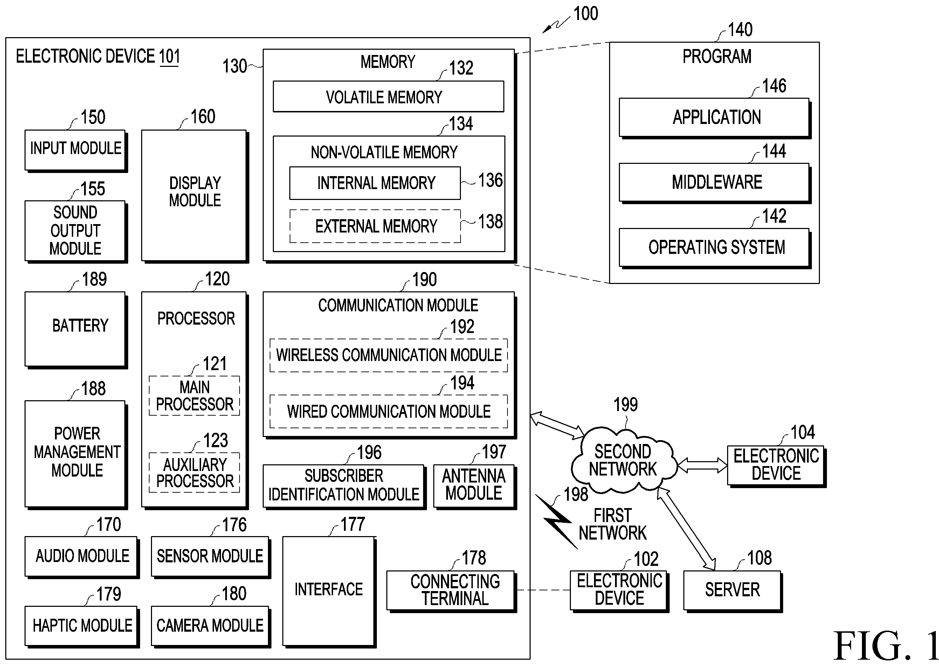

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

In the following detailed description, the same reference numeral may be assigned to elements that can be easily understood through prior embodiments or may be omitted, and detailed description thereof may also be omitted. An electronic device according to an embodiment of the disclosure may be implemented through a selective combination of configurations of different embodiments, and a configuration of one embodiment may be replaced with a configuration of another embodiment. For example, it should be noted that the disclosure is not limited to specific drawings or embodiments.

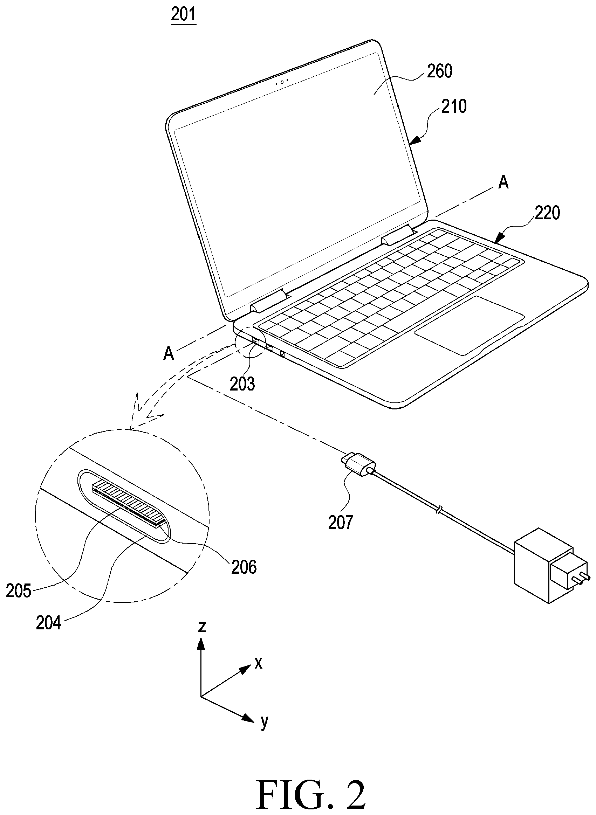

FIG. 2 is a perspective view of an electronic device 201 supporting a plurality of connectors according to an embodiment.

According to an embodiment, the electronic device 201 may be various types of computers. For example, the electronic device 201 may include a notebook computer including a standard notebook, an Ultrabook, a netbook, and a tabbook, a laptop computer, a tablet computer, or a desktop computer. Moreover, without being limited to the above description, the electronic device 201 may be implemented as various types of electronic devices 201 in which a plurality of connectors are arranged. For example, the electronic device 201 may include an electronic device in a type such as a smartphone or a tablet.

According to an embodiment, as illustrated in FIG. 2, the electronic device 201 may include a housing 210 or 220. According to an embodiment, the electronic device 201 may include a touch screen display 260 (e.g., the display module 160 of FIG. 1) disposed so as to be exposed in at least some regions of the housing 210 or 220. According to an embodiment, the electronic device 201 may include a keyboard (e.g., the input module 150 of FIG. 1) disposed so as to be exposed in at least some regions of the housing 210 or 220.

According to an embodiment, the electronic device 201 may include at least one connector 203 (e.g., the connectivity terminal 178 of FIG. 1) that makes the connection with an external device (e.g., an external power supply device) possible. According to an embodiment, the electronic device 201 may be implemented to include two or more connectors. In addition, the connector 203 may be a socket-type connector.

According to an embodiment, an opening 204 that exposes the connector 203 may be disposed in at least some regions of the housing 210 or 220, and the connector 203 may be disposed in the opening 204. According to an embodiment, a header-type external connector 207 may be coupled to the connector 203 in the forward or reverse direction. That is, the external connector 207 may be inserted into the connector 203 in any direction regardless of the orientation thereof. According to an embodiment, the external connector 207 may be connected to the external power supply device via a cable, and the electronic device 201 and the external power supply device may be connected as the connector 203 and the external connector 207 are coupled. According to an embodiment, the external power supply device may be various external devices capable of accessing the electronic device 201. For example, the external power supply device is a USB on-the-go (OTG) device, and may include a charger (or a battery pack), a charging adapter, an audio device, a notebook, a computer, memory, or an antenna (e.g., a digital multimedia broadcasting antenna or an FM antenna). For example, the external power supply device may be a device that transfers outside power to the electronic device 201, and the type thereof is not limited thereto.

According to an embodiment, the connector 203 may be used as an interface for connecting the electronic device 201 with the external power supply device or a power source (not illustrated). The electronic device 201 may receive power from the power source through the connector 203, or may charge the battery by using the power source. In addition, the electronic device 201 may transmit data of the electronic device 201 to the external power supply device through the external connector 207 connected to the connector 203, or may receive data from the external power supply device. According to an embodiment, the connector 203 may include universal serial bus (USB) type C in which a contact substrate 205 may be formed. Further, a mid-plate 206 having an electrically conductive characteristic may be formed within the contact substrate 205, and a plurality of pins may be formed on the upper surface and the lower surface of the contact substrate 205.

As the demand for the high-performance electronic device 201 increases, the performance of the electronic device 201 is being maximized, but the power required for the electronic device 201 is also increasing. Because the usage time of the electronic device 201 is limited by the currently embedded battery capacity, the importance of high-speed charging of the battery is also increasing. Therefore, for high-speed charging of the battery, the electronic device 201 increasingly requires the connection to a high-power external power supply device with power higher than the rated power of the electronic device 201.

In an embodiment, the electronic device 201 may charge the battery by using the external power supply device connected to each of the two or more connectors, and thus may provide a fast charging function as if a high-power external power supply device is connected.

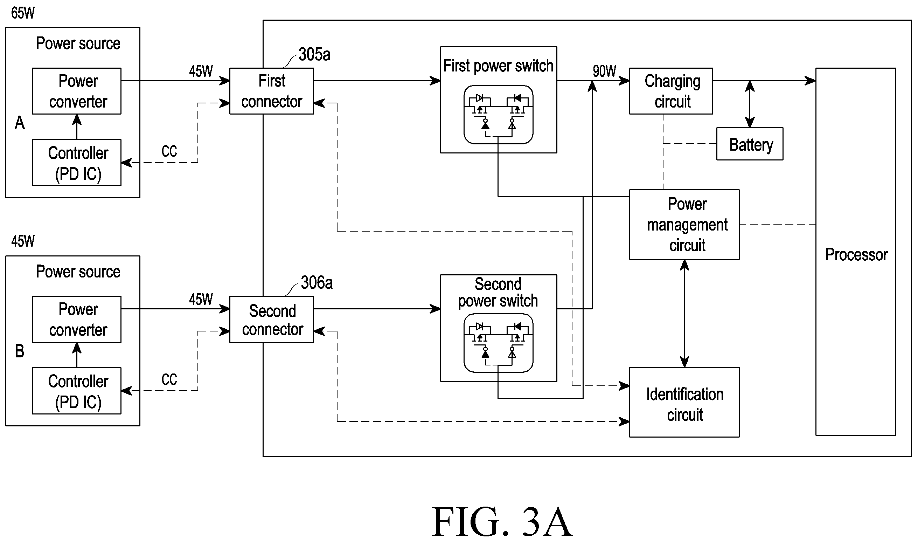

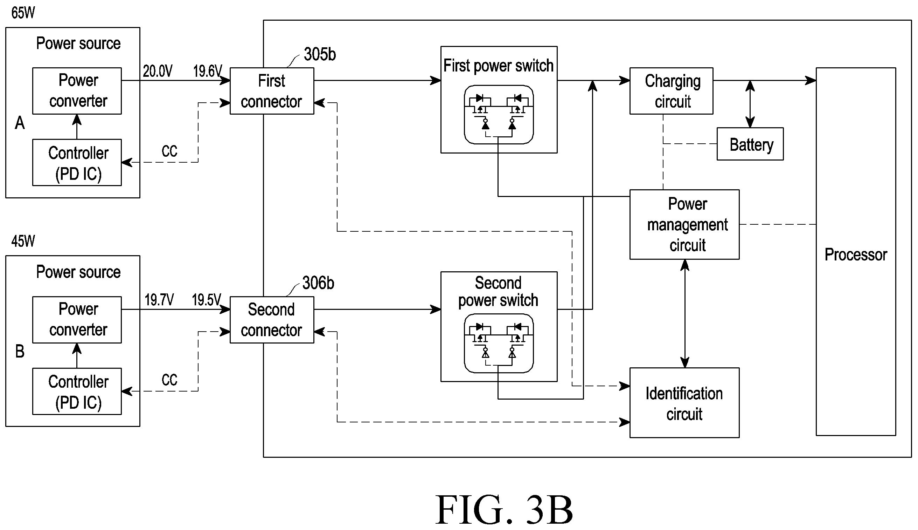

An operation in which the electronic device 201 receives power from the external power supply device through each of two or more connectors will be described with reference to FIG. 3A and FIG. 3B.

FIG. 3A is a diagram illustrating an operation of combining an external power supply device with a second rated power lower than a first rated power in a state in which the external power supply device with the first rated power is combined with an electronic device according to an embodiment, and FIG. 3B is a diagram illustrating an operation of combining an external power supply device with the same rated power as the first rated power in a state in which the external power supply device with the first rated power is combined with the electronic device according to an embodiment.

Referring to FIG. 3A, an electronic device (e.g., the electronic device 101 or 201) may be electrically connected to an external power supply device through a first connector (or first port) 305a.

As illustrated in FIG. 3A, in a state in which the electronic device receives power from the external power supply device connected via the first connector 305a, a connection of another external power supply device may be detected through a second connector (or second port) 306a. When the connection of another external power supply device is detected, the electronic device may compare the rated power of the external power supply device connected to the first connector 305a with the rated power of the external power supply device connected through the second connector 306a. For example, when the rated power of the external power supply device connected to the first connector 305a is 65 W and the rated power of the external power supply device connected to the second connector 306a is 45 W, the electronic device may be able to perform parallel control by doubling the smaller rated power among the rated power of the two external power supply devices. According to an embodiment, an example in which the parallel control can be performed twice due to the input through two interfaces (e.g., the first connector 305a and the second connector 306a) has been described, but the corresponding multiple (e.g., the multiple corresponding to the number of connected external power supply devices) may be adjusted, of course, if there are three or more (e.g., four) interfaces for charging. The electronic device may control the on/off of the power switch so as to supply power to the entire system, and to prevent the current from flowing in the reverse direction even when the voltage is higher in either the first connector 305a or the second connector 306a, while enabling power supply. For example, power supply of 45 W * 2 = 90 W may be possible, not 110 W which is a sum of 65 W and 45 W.

For example, when the rated power of the external power supply device connected to the first connector 305a is 65 W, and the rated power of the external power supply device connected to the second connector 306a is 25 W, the electronic device may receive only 25 W * 2 = 50 W, not 90 W which is a sum of 65 W and 25 W if twice the smaller rated power among the rated power of the two external power supply devices is smaller than the larger rated power. That is, even if the external power supply device of 25 W is additionally connected in a state in which the external power supply device of 65 W is connected, the effect of expanding the actual power supply is not expected.

As illustrated in FIG. 3A, when the rated power of the two external power supply devices are different, it may be impossible to control power imbalance, and thus the maximum power that is the sum of the rated power of the two external power supply devices may not be used, resulting in a restriction in power supply.

FIG. 3B illustrates an example in which the rated power of the two external power supply devices is the same. For example, when the rated power of the external power supply device connected to the first connector 305b is 65 W, and the rated power of the external power supply device connected to the second connector 306b is 65 W, the total power of 130 W, which is the sum of 65 W and 65 W, should be supplied, but it may be difficult to actually supply the maximum power of 130 W depending on the degree of output voltage imbalance in the external power supply device. For example, even if the output voltage of the external power supply device is 20 V, the output voltage of each of the two external power supply devices may be different due to an allowable error of the output voltage (e.g., about 5%) (e.g., about 20.0 V and about 19.7 V), and the voltage formed in each of the first connector 305b and the second connector 306b may also be different (e.g., about 19.6 V and about 19.5 V) due to a minute voltage difference caused by a cable/connector resistance component. The numerical values in FIG. 3B are merely for illustrative purposes, and various modifications or changes may be possible thereto.

Therefore, since imbalance in the power supplied to the electronic device may occur according to a degree of voltage imbalance formed in the connector due to a difference in the output voltage of the external power supply device, it is necessary to control power so that power from the external power supply device is supplied as much as possible when the external power supply device is connected through two or more connectors.

According to an embodiment, when the external power supply device is connected through two or more connectors, an electronic device, a method of operating the same, and a storage medium for controlling power so that power from the external power supply device is supplied as much as possible may be provided.

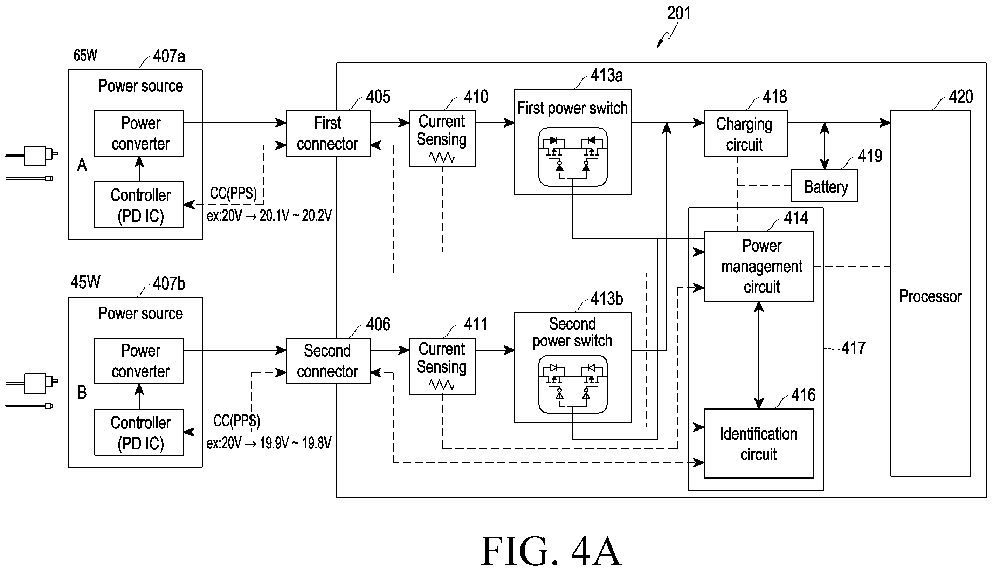

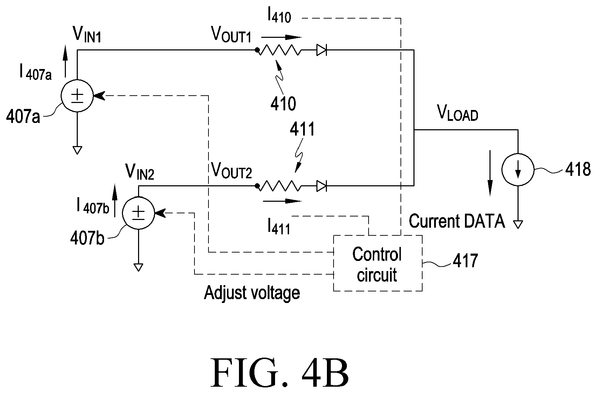

FIG. 4A is an internal block diagram illustrating a configuration of an electronic device including a plurality of connectors according to an embodiment, and FIG. 4B is a circuit diagram illustrating the internal block diagram of the electronic device of FIG. 4A.

Referring to FIG. 4A and FIG. 4B, according to an embodiment, the electronic device 201 (e.g., the electronic device 101 of FIG. 1 or the electronic device 201 of FIG. 2) may include a first connector 405, a second connector 406, a control circuit 417, a charger circuit 418, and a battery 419 (e.g., the battery 189 of FIG. 1). According to an embodiment, the electronic device 201 may further include a first power switch 413a, a second power switch 413b, and a processor 420 (e.g., the processor 120 of FIG. 1).

Referring to FIG. 4A and FIG. 4B, the operation of the electronic device 201 according to an embodiment may be controlled by the control circuit 417 or the processor 420 of the electronic device 201. Performing a specific operation by the electronic device 201 may mean controlling the electronic device 201 or a component included in the electronic device 201 by the control circuit 417 or the processor 420 of the electronic device 201. In the following description, an operation of controlling an output voltage of the external power supply device will be described as being controlled by the control circuit 417 of the electronic device 201.

Referring to FIG. 4A and FIG. 4B, the electronic device 201 may include two or more connectors 405 and 406. Through each of the connectors 405 and 406, the connection with the external power supply devices 407a and 407b may be made. For example, the connectors 405 and 406 may be connectors supporting USB type C.

When the electronic device 201 is electrically connected to the external power supply device 407a or 407b, the electronic device 201 may receive power from the external power supply device 407a or 407b. For example, the electronic device 201 may receive power from the external power supply device 407a or 407b through a power terminal (e.g., VBUS of a USB connector) of the connector 405 or 406, so as to be driven by the power.

According to an embodiment, the control circuit 417 is a separate component from the processor 420, and may be a circuit in which a power management integrated circuit (PMIC) 414 and an identification circuit 416 are integrated. According to an embodiment, the control circuit of the electronic device 201 may include the processor 420. The identification circuit 416 of FIG. 4A may be referred to as a PD controller, and may include at least one of a micro-USB interface controller (MUIC), a power delivery integrated circuit (PDIC), or configuration channel (CC) logic. In addition, the power management circuit 414 in FIG. 4A may be a micom.

According to an embodiment, at least some of the power management circuit 414, the processor 420, and the identification circuit 416 may be implemented as a single IC. According to an embodiment, at least a part of the power management circuit 414 and the identification circuit 416 may be implemented as a single IC, and an IC including the processor 420 may be configured as a separate IC.

The first connector 405 may be connected to the first external power supply device 407a, and the second connector 406 may be connected to the second external power supply device 407b. Each of the first external power supply device 407a and the second external power supply device 407b may be capable of adjusting an output voltage in real time.

Each of the two or more connectors 405 and 406 may include one or more signal terminals, and may include, for example, a power terminal for power supply or reception, or an identification terminal for identifying an external power supply device. The terminal may also be referred to as a pin.

According to an embodiment, the control circuit 417 may recognize the physical connection of the first external power supply device 407a as the first external power supply device 407a is coupled through the first connector 405. The control circuit 417 may recognize the connection of the first external power supply device 407a and identify the first external power supply device 407a through at least one pin, for example, an identification terminal (e.g., a configuration channel (CC) pin) among the plurality of signal pins included in the first connector 405. In addition, the control circuit 417 may receive power information related to the first external power supply device 407a through the first connector 405. For example, when initially connected in the power negotiation step, the control circuit 417 may receive at least one piece of power information (e.g., a current value or a voltage value) supportable by the first external power supply device 407a.

The identification circuit 416 may identify coupling (or attach) to or separation (or detach) from the external power supply device by using at least one of the first connector 405 and the second connector 406. The identification circuit 416 may adjust the output voltage of the external power supply device connected through at least one of the first connector 405 and the second connector 406.

The charging circuit 418 may be a circuit which provides power received through at least one of the first connector 405 and the second connector 406 to the battery 419. The output voltage of the charging circuit 418 may be an input voltage (e.g., a charging voltage) of the battery 419. The battery 419 may be charged based on the output voltage (e.g., the charging voltage) of the charging circuit 418.

The first power switch 413a and the second power switch 413b connected to the connectors 405 and 406, respectively, in series may be enabled or disabled under the control of the control circuit 417. Each of the power switches 413a and 413b may be connected to the input of the power management circuit 414, and may serve to short or connect a path for transferring power required for charging the battery 419 and power required for the system. For example, the first power switch 413a and the second power switch 413b may prevent the current from flowing in the reverse direction even if the voltage of one of the connectors 405 and 406 is high, and at the same time, may supply power required for the system.

The power management circuit 414 may control the voltage of the power supplied to each element included in the electronic device 201. The power management circuit 414 may output a preset voltage. Although "voltage" is described as an example in FIG. 4A and FIG. 4B for the sake of illustrating an embodiment, "voltage" may be alternatively/interchangeably used with one of "current", "power", or "impedance".

The processor 420 may control the operation of the electronic device 201 and/or signal flow between the blocks of the electronic device 201, and may perform a data processing function of processing data. For example, the processor 420 may be a central processing unit (CPU), an application processor (AP), a micro controller unit (MCU), or a microprocessor unit (MPU). The controller 420 may be a single core processor or a multi-core processor.

Meanwhile, the external power supply device may be electrically connected through at least one of the connectors 405 and 406, and the electronic device 201 may perform a power negotiation step with the external power supply device. In the power negotiation step, when one or more pieces of power information (e.g., a current value and a voltage value) supportable by the external power supply device is notified to the electronic device 201, the electronic device 201 may select one piece of the supportable power information and inform the external power supply device of the same, and thus the configuration based on the optimized power information between each other may be made.

For example, when the identification circuit 416 receives first power information supportable by the first external power supply device 407a through the first connector 405, the control circuit 417 may determine an output voltage of the first external power supply device 407a, based on the first power information. Accordingly, the control circuit 417 may control the first external power supply device 407a to supply power to the charging circuit 418 through the first connector 405 at the determined output voltage. For example, when a first external power supply device 407a having a rated power of 65 W is connected to the electronic device 201 alone, a maximum of power of 65 W may be supplied from the first external power supply device 407a. The control circuit 417 may receive a maximum of power of 65 W through an input current limit function by using the power information of the first external power supply device 407a.

The control circuit 417 may detect a connection of the second external power supply device 407a through the second connector 406 while receiving power at the determined output voltage through the first connector 405. When the connection of the second external power supply device 407b is detected through the second connector 406, the control circuit 417 may receive second power information supportable by the second external power supply device 407b from the second external power supply device 407b through the identification circuit 416. The control circuit 417 may identify the second power information of the second external power supply device 407b, and may determine an output voltage of the second external power supply device 407b, based on the second power information. Accordingly, the control circuit 417 may control the second external power supply device 407b to supply power to the charging circuit 418 at the determined output voltage through the second connector 406.

For example, when the second external power supply device 407b having a rated power of 45 W is additionally connected to the electronic device 201, the control circuit 417 may calculate a rated power ratio between the first external power supply device 407a and the second external power supply device 407b by using the second power information. For example, the identification circuit 416 may transfer power information of the second external power supply device 407b to the power management circuit 414, and the power management circuit 414 may calculate the rated power ratio. In addition, the control circuit 417 may control the first power switch 413a and/or the second power switch 413b to supply power from the second external power supply device 407b to the system of the electronic device 201 or the charging circuit 418. The control circuit 417 may control the first power switch 413a and/or the second power switch 413b to control power to be simultaneously supplied to the first external power supply device 407a and the second external power supply device 407b while preventing the current from flowing in the reverse direction, for example, a direction from the electronic device 201 to the second external power supply device 407b.

As illustrated in FIG. 4A, in a state in which the first external power supply device 407a (e.g., external power supply device of 65 W) is coupled to the first connector 405 and the second external power supply device 407b (e.g., external power supply device of 45 W ) is coupled to the second connector 406, the rated power of the two external power supply devices 407a and 407b may not be supplied up to the maximum power, which is the sum of the rated power of the two external power supply devices 407a and 407b due to various external factors, such as the degree of voltage imbalance formed in the connectors 405 and 406.

According to an embodiment, when the first external power supply device 407a and the second external power supply device 407b are connected through two or more connectors 405 and 406, the control circuit 417 may control the power supplied to the charging circuit 418 to be maximum, according to the output voltage of the first external power supply device 407a and the output voltage of the second external power supply device 407b.

To this end, the control circuit 417 may monitor power supplied from the first external power supply device 407a and the second external power supply device 407b, and may adjust at least one of the output voltage of the first external power supply device 407a and the output voltage of the second external power supply device 407b, based on the monitoring result.

According to an embodiment, a first current amount of the first connector 405 and a second current amount of the second connector 406 may be used as a reference for adjusting at least one of the output voltage of the first external power supply device 407a and the output voltage of the second external power supply device 407b. For example, the control circuit 417 may monitor the first current amount of the first connector 405 and the second current amount of the second connector 406 in monitoring the power supplied from the first external power supply device 407a and the second external power supply device 407b. For example, when the first external power supply device 407a having the rated power of 65 W is connected to the electronic device 201, and the second external power supply device 407b having the rated power of 45 W is additionally connected to the electronic device 201, the control circuit 417 may monitor the current amount supplied through each of the connectors 405 and 406 while maintaining 65 W configured in a single connection, and calculate the input current ratio of each of the connectors 405 and 406. The control circuit 417 may compare the current ratio and the power ratio and, when the difference therebetween is greater than a threshold range, the control circuit 417 may adjust at least one of the output voltage of the first external power supply device 407a and/or the output voltage of the second external power supply device 407b so that the current ratio and the power ratio match or become similar within the threshold range.

Meanwhile, as the first external power supply device 407a and the second external power supply device 407b are connected, the control circuit 417 may identify the rated power in each of the first external power supply device 407a and the second external power supply device 407b. The control circuit 417 may determine (or calculate or obtain) a rated power ratio between the first external power supply device 407a and the second external power supply device 407b by using the first power information and the second power information indicating the rated power of each of the first external power supply device 407a and the second external power supply device 407b. For example, when the rated power of the first external power supply device 407a is 65 W and the rated power of the second external power supply device 407b is 45 W, the rated power ratio between the first external power supply device 407a and the second external power supply device 407b may be 45/65 = about 0.692. For example, when power of 100 W is supplied, the first external power supply device 407a may be 100*65/(65+45) = 59.1 W and the second external power supply device 407b may be 100*45/(65+45) = 40.9 W, and the power ratio may be determined as 40.9/59.1 = about 0.692.

The control circuit 417 may adjust the output voltage of at least one of the first external power supply device 407a and the second external power supply device 407b such that the ratio between the first power amount supplied from the first external power supply device 407a and the second power amount supplied from the second external power supply device 407b corresponds to the determined power ratio.

The control circuit 417 may monitor (410, 411) the first current amount of the first connector 405 and the second current amount of the second connector 406 in order to determine the ratio between the first power amount supplied from the first external power supply device 407a and the second power amount supplied from the second external power supply device 407b. Since power (P) is a product of current (I) and voltage (V) and the magnitude of the power (P) is proportional to the magnitude of the current (I), the power amount may be compared through the current amount supplied to each of the connectors 405 and 406.

Based on the first current amount and the second current amount, the control circuit 417 may determine (or calculate or obtain) a ratio between the first power amount supplied from the first external power supply device 407a and the second power amount supplied from the second external power supply device 407b. Accordingly, the control circuit 417 may adjust the output voltage of at least one of the first external power supply device 407a and the second external power supply device 407b such that the ratio between the first current amount and the second current amount corresponds to the determined power ratio (e.g., about 0.692).

Referring to FIG. 4A and FIG. 4B, the first external power supply device 407a and the connector 405 are connected in series, and thus the current flows between the first external power supply device 407a and the connector 405 is the same, not different. Accordingly, the current (I₄₀₇ₐ) of the first external power supply device 407a and the first current amount (I₄₁₀) measured at an output terminal of the connector 405 may always be the same, regardless of whether the output voltage is adjusted (e.g., I₄₀₇ₐ = I₄₁₀, I_{407b} = I₄₁₁). Therefore, the control circuit 417 may perform control to adjust at least one of the output voltage (V_{IN1}) of the first external power supply device 407a and/or the output voltage (V_{IN2}) of the second external power supply device 407b so that the ratio of the rated power of the first external power supply device 407a to the rated power of the second external power supply device 407b becomes identical to or similar within a threshold range to the ratio between the first current amount (I₄₁₀) measured at the output terminal of the first connector 405 and the second current amount (I₄₁₁) measured at the output terminal of the second connector 406.

As described above, the control circuit 417 may monitor the current amount of each of the connectors 405 and 406, and may adjust the output voltage of at least one of the first external power supply device 407a and the second external power supply device 407b such that a ratio between the monitored first current amount and second current amount corresponds to a determined power ratio (e.g., about 0.692) between the first external power supply device 407a and the second external power supply device 407b. The control circuit 417 may adjust the output voltage of at least one of the first external power supply device 407a and the second external power supply device 407b in a specified unit. The specified unit may be, for example, about 0.02 V to 0.1 V.

According to an embodiment, the control circuit 417 may compare the current ratio between the first current amount and the second current amount with the determined power ratio and identify whether the current ratio corresponds to the power ratio within a threshold range. When the current ratio does not correspond to the determined power ratio within the threshold range, that is, when the current ratio and the determined power ratio are compared and the difference therebetween exceeds the threshold range, the control circuit 417 may finely adjust the output voltage of at least one of the first external power supply device 407a and the second external power supply device 407b in a specified unit, so that the current ratio and the determined power ratio are matched or are similar within the threshold range. At this time, as the voltage formed in the connector 405 or 406 is higher, more power may be supplied, and as the voltage formed in the connector 405 or 406 is lower, less power may be supplied. Accordingly, the control circuit 417 may adjust the output voltage of the external power supply device with a small capacity downward or adjust the output voltage of the external power supply device with a large capacity upward so that the current ratio and the rated power ratio may be matched or be similar. Therefore, the control circuit 417 may adjust the output voltage of the first external power supply device 407a upward by a specified unit and adjust the output voltage of the second external power supply device 407b downward by a specified unit.

In contrast, when the result of comparing the current ratio between the first current amount and the second current amount with the determined power ratio is within the threshold range, it may indicate that the power from the first external power supply device 407a and the power from the second external power supply device 407b are being supplied to the maximum extent, and thus the control circuit 417 may stop the operation of adjusting the output voltage of at least one of the first external power supply device 407a and the second external power supply device 407b. In addition, when the result of comparing the current ratio between the first current amount and the second current amount with the determined power ratio after the initial connection is within the threshold range, the control circuit 417 may not perform the operation of adjusting the output voltage of at least one of the first external power supply device 407a and the second external power supply device 407b.

On the other hand, since the output voltage of at least one of the first external power supply device 407a and the second external power supply device 407b may be adjusted in a specified unit and then the supplied power may vary depending on the adjusted output voltage, the control circuit 417 may monitor a third current amount of the first connector and a fourth current amount of the second connector. The control circuit 417 may determine (or calculate or obtain) a current ratio between the third current amount and the fourth current amount, and identify whether the result of comparing the current ratio between the third current amount and the fourth current amount and the determined power ratio is within a threshold range.

If the result of the comparison is within the threshold range, the control circuit 417 may stop the operation of adjusting the output voltage of at least one of the first external power supply device 407a and the second external power supply device 407b. Accordingly, at least one of the first external power supply device 407a and the second external power supply device 407b may supply power to the electronic device 201 while maintaining the adjusted output voltage, so that the electronic device 201 may receive the maximum amount of power. On the other hand, if the result of comparing the current ratio between the third current amount and the fourth current amount with the determined power ratio is out of the threshold range, the control circuit 417 may repeatedly perform the operation of adjusting the output voltage of at least one of the first external power supply device 407a and the second external power supply device 407b in a specified unit.

Meanwhile, in the above description, for example, it has been described as an example that when the difference between the first power information and the second power information is not large, such as when the rated power of the first external power supply device 407a is 65 W and the rated power of the second external power supply device 407b is 45 W, the output voltage of the first external power supply device 407a may be adjusted upward in the specified unit, or the output voltage of the second external power supply device 407b may be adjusted downward in the specified unit. However, there may also be a case in which the difference between the first power information and the second power information is large, such as when the rated power of the first external power supply device 407a is 65 W and the rated power of the second external power supply device 407b is 25 W.

Therefore, when the control circuit 417 acquires the first power information from the first external power supply device 407a and acquires the second power information from the second external power supply device 407b, the control circuit 417 may compare the first power information with the second power information. When the first power information is greater than the second power information, the control circuit 417 may identify whether the first power information is greater than twice the second power information. For example, when it is assumed that the rated power of the first external power supply device 407a connected to the first connector 405 is 65 W, and the rated power of the second external power supply device 407b connected through the second connector 406 is 25 W, in the case in which the first power information is larger than twice the second power information, the control circuit 417 may adjust the output voltage of the first external power supply device 407a upward by a specified voltage or adjust the output voltage of the second external power supply device 407b downward by the specified voltage, and then monitor a first current amount of the first connector 405 and a second current amount of the second connector 406.

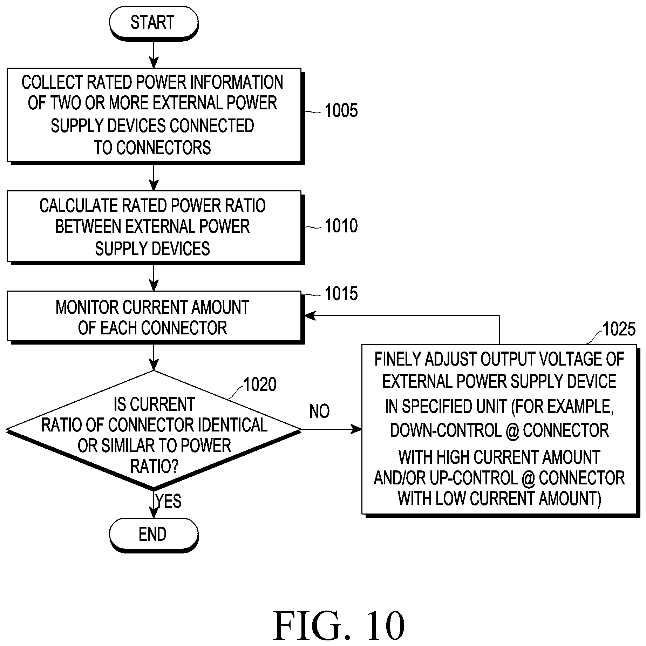

Meanwhile, when the first power information and the second power information are the same, the connector having the higher current may be identified among the connectors405 and 406, and the output voltage of at least one of the first external power supply device 407a and the second external power supply dev407b may be adjusted according to the current of the identified connector. A detailed description thereof will be made with reference to FIG. 10.

According to an embodiment, the electronic device 101 or 201 may include a battery 189 or 419, a first connector 405 to which a first external power supply device may be connected, a second connector 406 to which a second external power supply device may be connected, a charging circuit 418 configured to supply power received through at least one of the first connector and the second connector to the battery, and a control circuit 120, 414, or 420.

According to an embodiment, the control circuit may be configured to, when a connection of the first external power supply device is detected through the first connector, identify first power information of the first external power supply device.

According to an embodiment, the control circuit may be configured to perform control to supply power to the charging circuit at a first voltage through the first connector by the first external power supply device, based on at least the first power information.

According to an embodiment, the control circuit may be configured to, when a connection of the second external power supply device is detected through the second connector while the power is supplied at the first voltage through the first connector, identify second power information of the second external power supply device.

According to an embodiment, the control circuit may be configured to determine a power ratio between the first external power supply device and the second power supply device, based on the first power information and the second power information.

According to an embodiment, the control circuit may be configured to adjust an output voltage of at least one of the first external power supply device and the second external power supply device such that a ratio between a first power amount supplied from the first external power supply device and a second power amount supplied from the second external power supply device corresponds to the determined power ratio.

According to an embodiment, the control circuit may be configured to monitor a first current amount of the first connector and a second current amount of the second connector and determine a ratio between the first power amount supplied from the first external power supply device and the second power amount supplied from the second external power supply device, based on the first current amount and the second current amount.

According to an embodiment, the control circuit may be configured to determine a current ratio between the first current amount and the second current amount, identify whether the current ratio between the first current amount and the second current amount corresponds to the determined power ratio within a threshold range, and, based on identifying that the current ratio between the first current amount and the second current amount does not correspond to the determined power ratio within the threshold range, adjust the output voltage of at least one of the first external power supply device and the second external power supply device such that the current ratio between the first current amount and the second current amount corresponds to the determined power ratio.

According to an embodiment, the control circuit may be configured to, based on identifying that the current ratio between the first current amount and the second current amount corresponds to the determined power ratio within the threshold range, stop adjusting the output voltage of at least one of the first external power supply device and the second external power supply device.

According to an embodiment, the control circuit may be configured to adjust the output voltage of at least one of the first external power supply device and the second external power supply device in a specified unit.

According to an embodiment, the control circuit may be configured to compare the first power information and the second power information and, when the first power information and the second power information are different, adjust the output voltage of the first external power supply device upward by the specified unit or adjust the output voltage of the second external power supply device downward by the specified unit such that the ratio between the first power amount supplied from the first external power supply device and the second power amount supplied from the second external power supply device corresponds to the determined power ratio.

According to an embodiment, the control circuit may be configured to, when the first power information and the second power information are identical, identify a connector having a larger current amount among the first current amount of the first connector and the second current amount of the second connector, and, when the connector having the larger current amount is the first connector, adjust the output voltage of the first external power supply device downward or adjust the output voltage of the second external power supply device upward such that the current ratio between the first current amount and the second current amount corresponds to the determined power ratio.

According to an embodiment, the control circuit may be configured to, after adjusting the output voltage of at least one of the first external power supply device and the second external power supply device in the specified unit, monitor a third current amount of the first connector and a fourth current amount of the second connector, determine a current ratio between the third current amount and the fourth current amount, identify whether the current ratio between the third current amount and the fourth current amount corresponds to the determined power ratio within a threshold range, and maintain the at least one adjusted output voltage, based on identifying that the current ratio between the third current amount and the fourth current amount corresponds to the determined power ratio within the threshold range.

According to an embodiment, the control circuit may be configured to adjust the output voltage of at least one of the first external power supply device and the second external power supply device in the specified unit, based on identifying that the current ratio between the third current amount and the fourth current amount does not correspond to the determined power ratio within the threshold range.

According to an embodiment, the control circuit may be configured to compare the first power information and the second power information, when the first power information is larger than the second power information, identify whether the first power information is larger than twice the second power information, when the first power information is larger than twice the second power information, adjust the output voltage of the first external power supply device upward by a predetermined voltage or adjust the output voltage of the second external power supply device downward by the predetermined voltage, and then monitor the first current amount of the first connector and the second current amount of the second connector.

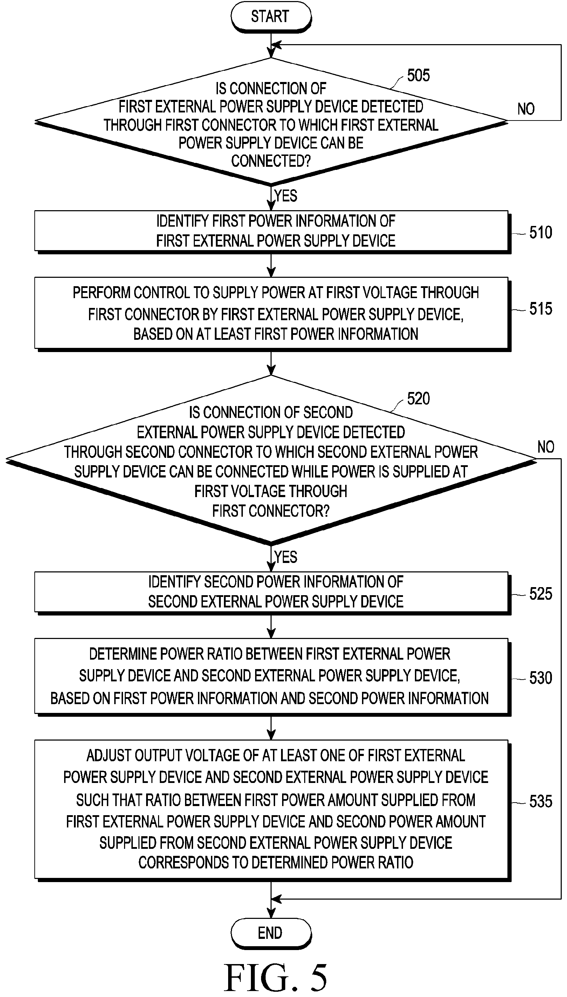

FIG. 5 is a flowchart illustrating an operation of an electronic device for power control according to an embodiment. Referring to FIG. 5, the operation method may include operations 505 to 535. Each of the operation method in FIG. 5 may be performed by an electronic device (e.g., the electronic device 101 of FIG. 1, the electronic device 201 of FIG. 2, or the electronic device 201 of FIG. 4A) or at least one processor (e.g., at least one of the processor 120 of FIG. 1, the control circuit 417 of FIG. 4A, or the processor 420 of FIG. 4A) of the electronic device. In an embodiment, at least one of operations 505 to 535 may be omitted, the order of some operations may be changed, other operations may be added, or at least two operations may be performed in parallel.

According to an embodiment, in operation 505, the electronic device 201 (or the control circuit 417) may detect the connection of the first external power supply device through the first connector 405 connectable to the first external power supply device.

When the connection of the first external power supply device is detected, the electronic device 201 may identify first power information of the first external power supply device in operation 510.

In operation 515, the electronic device 201 may control the first external power supply device to supply power through the first connector at a first voltage, based on the first power information.

In operation 520, the electronic device 201 may detect the connection of the second external power supply device through a second connector 406 to which the second external power supply device may be connected while receiving power at the first voltage through the first connector.

When the connection of the second external power supply device is detected, the electronic device 201 may identify second power information of the second external power supply device in operation 525. When the connection of the second external power supply device is not detected through the second connector 406 to which the second external power supply device may be connected in operation 520 while power is supplied through the first connector at the first voltage, the electronic device 201 may end an operation for power control for the two or more external power supply devices.

In operation 530, the electronic device 201 may determine a power ratio between the first external power supply device and the second external power supply device, based on the first power information and the second power information.

According to an embodiment, the electronic device 201 may monitor a first current amount of the first connector and a second current amount of the second connector. The electronic device 201 may determine (or calculate) a ratio between a first power amount supplied from the first external power supply device and a second power amount supplied from the second external power supply device, based on the first current amount and the second current amount.

In operation 535, the electronic device 201 may adjust an output voltage of at least one of the first external power supply device and the second external power supply device such that the ratio between the first power amount supplied from the first external power supply device and the second power amount supplied from the second external power supply device corresponds to the determined power ratio.

According to an embodiment, the electronic device 201 may determine (or calculate) a current ratio between the first current amount and the second current amount. The electronic device 201 may identify whether the current ratio between the first current amount and the second current amount corresponds to the determined power ratio within a threshold range. Based on identifying that the current ratio between the first current amount and the second current amount does not correspond to the determined power ratio within the threshold range, the electronic device 201 may adjust the output voltage of at least one of the first external power supply device and the second external power supply device so that the current ratio between the first current amount and the second current amount corresponds to the determined power ratio.

According to an embodiment, based on identifying that the current ratio between the first current amount and the second current amount corresponds to the determined power ratio within the threshold range, the electronic device 201 may stop the operation of adjusting the output voltage of at least one of the first external power supply device and the second external power supply device.

According to an embodiment, the output voltage of at least one of the first external power supply device and the second external power supply device may be adjusted in a specified unit.

According to an embodiment, the electronic device 201 may compare the first power information with the second power information. When the first power information and the second power information are different, the electronic device 201 may adjust the output voltage of the first external power supply device upward by the specified unit or adjust the output voltage of the second external power supply device downward by the specified unit such that the ratio of the first power amount supplied from the first external power supply device and the second power amount supplied from the second external power supply device corresponds to the determined power ratio.

According to an embodiment, when the first power information and the second power information are the same, the electronic device 201 may identify, among the first current amount of the first connector and the second current amount of the second connector, a connector with a larger current amount. When the connector with the large current is the first connector, the electronic device 201 may adjust the output voltage of the first external power supply device downward or adjust the output voltage of the second external power supply device upward such that the current ratio between the first current and the second current corresponds to the determined power ratio.

According to an embodiment, the electronic device 201 may adjust the output voltage of at least one of the first external power supply device and the second external power supply device in the specified unit, and then monitor a third current amount of the first connector and a fourth current amount of the second connector. The electronic device 201 may determine a current ratio between the third current amount and the fourth current amount. The electronic device 201 may identify whether the current ratio between the third current amount and the fourth current amount corresponds to the determined power ratio within a threshold range. The electronic device 201 may maintain the at least one adjusted output voltage, based on identifying that the current ratio between the third current amount and the fourth current amount corresponds to the determined power ratio within the threshold range.

According to an embodiment, based on identifying that the current ratio between the third current amount and the fourth current amount does not correspond to the determined power ratio within the threshold range, the electronic device 201 may adjust the output voltage of at least one of the first external power supply device and the second external power supply device in the specified unit.

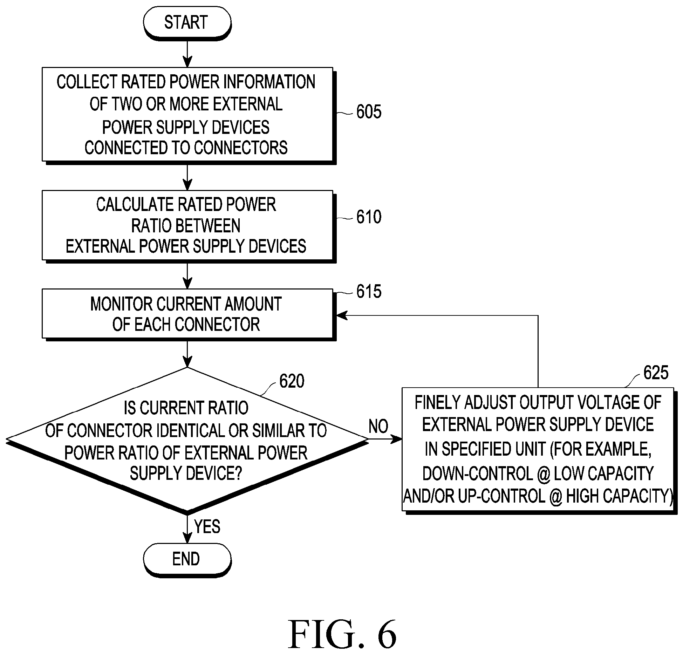

FIG. 6 is a flowchart illustrating an operation of an electronic device for adjusting an output voltage of an external power supply device, according to an embodiment. Referring to FIG. 6, the operation method may include operations 605 to 625. Each operation of the operation method in FIG. 6 may be performed by an electronic device (e.g., the electronic device 101 of FIG. 1, the electronic device 201 of FIG. 2, or the electronic device 201 of FIG. 4A) or at least one processor (e.g., the processor 120 of FIG. 1, the control circuit 417 of FIG. 4A, or the processor 420 of FIG. 4A) of the electronic device. In an embodiment, at least one of operations 605 to 625 may be omitted, the order of some operations may be changed, other operations may be added, or at least two operations may be performed in parallel.

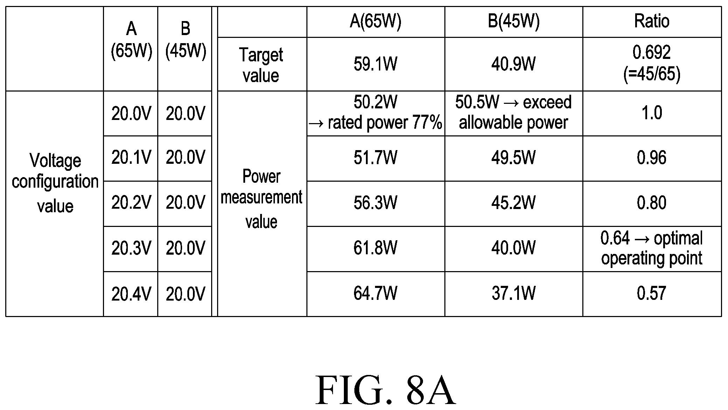

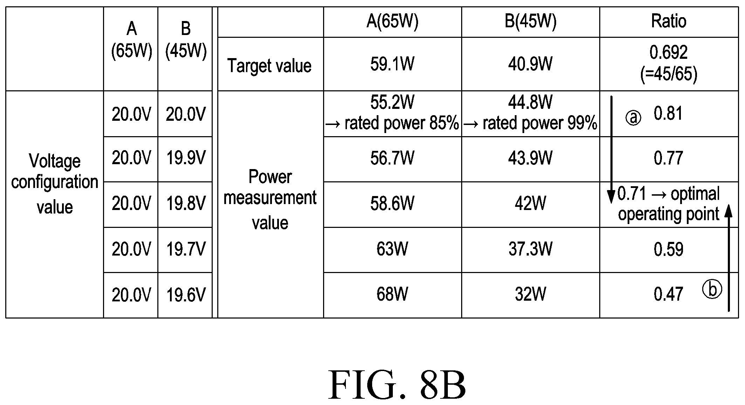

In order to help in the understanding of the description of FIG. 6, FIG. 8A and FIG. 8B may be referenced. FIG. 8A is a measurement table for illustrating a method of adjusting an output voltage of an external power supply device upward according to an embodiment, and FIG. 8B is a measurement table for illustrating a method of adjusting an output voltage of an external power supply device downward according to an embodiment.

In operation 605, the electronic device 201 may collect rated power information of two or more external power supply devices (e.g., the first external power supply device 407a and the second external power supply device 407b of FIG. 4A) connected to two or more connectors (e.g., the connectors 405 and 406 of FIG. 4A).

In operation 610, the electronic device 201 may calculate a rated power ratio between the external power supply devices.

In operation 615, the electronic device 201 may monitor a current amount of each connector.

In operation 620, the electronic device 201 may identify whether a current ratio of the connector matches or is similar to a power ratio of the external power supply device. For example, the electronic device 201 may identify whether a difference between the current of the connector and the power ratio of the external power supply device is within a threshold range. When the current ratio of the connector matches or is similar to the power ratio of the external power supply device, the electronic device 201 may end the operation for adjusting the power imbalance.

On the other hand, when the current ratio of the connector does not match or is not similar to the power ratio of the external power supply device, the electronic device 201 may finely adjust the output voltage of the external power supply device in a specified unit in operation 625. For example, the electronic device 201 may adjust the output voltage of the external power supply device with a small capacity downward in a specified unit, and adjust the output voltage of the external power supply device with a large capacity upward in a specified unit. After finely adjusting the output voltage of the external power supply device in the specified unit, the electronic device 201 may return to operation 615 and repeatedly perform the operation of monitoring the current amount of each connector.

For example, as illustrated in FIG. 8A and FIG. 8B, it may be assumed that the rated power of the first external power supply device (A) is 65 W and that the rated power of the second external power supply device (B) is 45 W, and the rated power ratio between the external power supply devices may be 45/65 = about 0.692. The numerical values in FIG. 8A and FIG. 8B are for the purpose of illustration only, and various modifications or variations thereof may be possible.

For example, when power of 100 W is supplied, the first external power supply device (A) may be 100 * 65/(65 + 45) = 59.1 W, and the second external power supply device (B) may be 100 * 45/(65 + 45) = 40.9 W, so that the power ratio may be determined as 40.9/59.1 = about 0.692. When voltage configuration values of the first external power supply device (A) and the second external power supply device (B) are both set to 20.0 V, a power measurement value (or measured current value) of the connector to which the first external power supply device (A) is connected may be 50.2 W, which corresponds to 77% of the rated power, and a power measurement value of the connector to which the second external power supply device (B) is connected may be predicted to be 50.5 W, thereby causing a situation in which the allowable power is exceeded. The electronic device 201 may identify whether the current ratio (e.g., about 1.0) of the connector matches or is similar to the power ratio (e.g., about 0.692) of the external power supply device. For example, the electronic device 201 may identify whether a difference between the current of the connector and the power ratio of the external power supply device is within a threshold range (e.g., about 0.692 ± 10%). If the voltage configuration value of the first external power supply device (A) is 20.3 V and the voltage configuration value of the second external power supply device (B) is 20.0 V through the fine adjustment in a specified unit, when the power measurement value (or current measurement value) of the connector to which the first external power supply device (A) is connected is 61.8 W, and the power measurement value of the connector to which the second external power supply device (B) is connected is 40.0 W, the current ratio (e.g., about 0.64) of the connector is within a threshold range (e.g., about 0.692 ± 10%) from the power ratio (e.g., about 0.692) of the external power supply device, so an operation of adjusting the output voltage of at least one of the first external power supply device (A) and the second external power supply device (B) may be stopped. Therefore, the output voltage of the external power supply device (A) may be maintained at 20.3 V, and the output voltage of the second external power supply device (B) may be maintained at 20.0 V.

As described above, when the optimal operating point is found, the electronic device 201 may make a change to 110 W (=65 W + 45 W), which is the sum of the rated power of the external power supply device (A) and the second external power supply device (B) connected through the input current limit function, and may change the configuration so that the maximum power that can be supplied by the connected first external power supply device (A) and second external power supply device (B) can be used. Here, after identifying the optimal operating point, the electronic device 201 may identify once again the current of each connector to additionally adjust the optimal operating point for voltage fine adjustment. According to an embodiment, when the first external power supply device (A) is connected alone, only a maximum of power of 65 W was available, but by additionally connecting the second external power supply device (B), a maximum of power of 110 W may be stably used, and thus, the battery charging time and the performance of the electronic device 201 may be improved.

Although FIG. 8A illustrates an example in which the output voltage of the external power supply device (A) with high capacity is adjusted upward in a specified unit, the power imbalance may also be adjusted by adjusting the output voltage of the external power supply device (B) with low capacity downward in the specified unit in the direction of ⓐ as illustrated in FIG. 8B. Conversely, the power imbalance may be adjusted by configuring the output voltage of the external power supply device (B) with low capacity to be reduced by a predetermined voltage (for example, about 0.7 V) and then adjusting the same upward in a specified unit, as in the direction of ⓑ.

In addition, although FIG. 8A and FIG. 8B illustrate a case in which the output voltage of the external power supply device (A) or the external power supply device (B) is adjusted, the output voltages of the external power supply device (A) and the external power supply device (B) may be adjusted simultaneously.

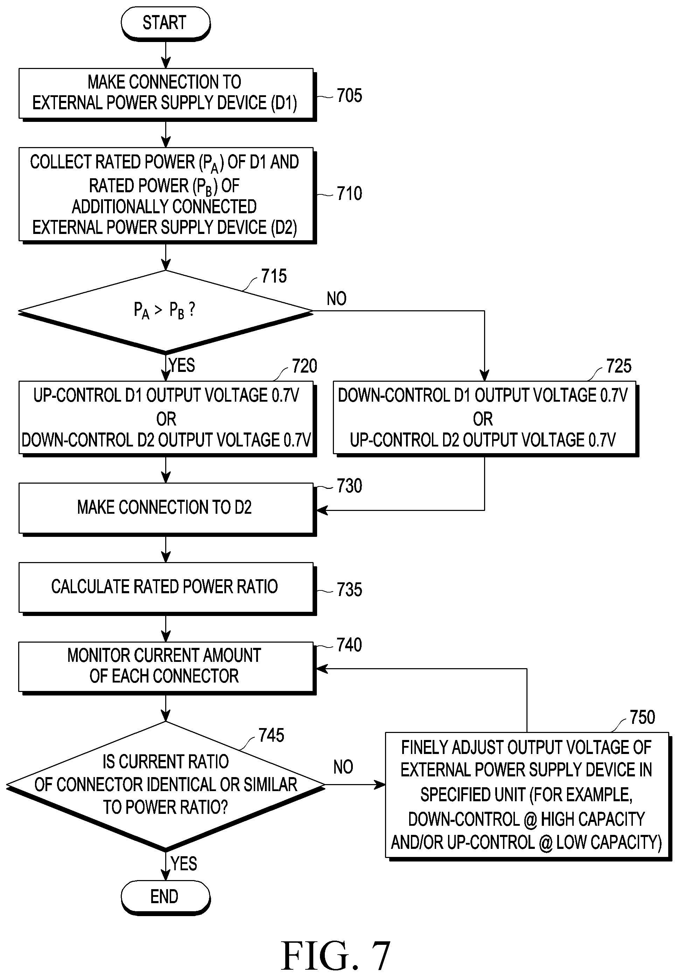

In the above description, the case in which, when two external power supply devices are connected, each or at least one of the output voltages of the two external power supply devices are adjusted based on the same voltage (e.g., 20 V) has been described as an example, but one output voltage may be controlled based on a voltage increased or decreased by a predetermined voltage, which will be described with reference to FIG. 7.

FIG. 7 is a flowchart illustrating an operation of an electronic device for protecting an external power supply device with a low rated power amount according to an embodiment. Referring to FIG. 7, the operation method may include operations 705 to 750. Each operation of the operation method in FIG. 7 may be performed by an electronic device (e.g., the electronic device 101 of FIG. 1, the electronic device 201 of FIG. 2, or the electronic device 201 of FIG. 4A) or at least one processor (e.g., the processor 120 of FIG. 1, the control circuit 417 of FIG. 4A, or the processor 420 of FIG. 4A) of the electronic device. In an embodiment, at least one of operations 705 to 750 may be omitted, the order of some operations may be changed, other operations may be added, or at least two operations may be performed in parallel.

FIG. 7 illustrates a method for adjusting power imbalance when twice the small rated power of the two external power supply devices is smaller than the other larger rated power. For example, when the rated power of the first external power supply device is 65 W and the rated power of the second external power supply device is 25 W, if both external power supply devices are to supply power, the second external power supply device with the small capacity may exceed its rated capacity, and thus over current protection (OCP) may occur. To prevent this, in an embodiment, the output voltage of the external power supply device with low capacity may be reduced to a specified voltage (e.g., about 0.7 V) or the output voltage of the external power supply device with high capacity may be increased to the specified voltage (e.g., about 0.7 V) to make a voltage difference, and then power control may be performed.

In operation 705, the electronic device 201 may be connected to an external power supply device (D1) (e.g., the first external power supply device 407a of FIG. 4A) through one of two or more connectors (e.g., the connectors 405 and 406 of FIG. 4A).

In operation 710, the electronic device 201 may collect rated power information (P_{A}) of the external power supply device (D1) and rated power information (P_{B}) of an additionally connected external power supply device (D2) (e.g., the first external power supply device 407b of FIG. 4A).

In operation 715, the electronic device 201 may compare the rated power information (P_{A}) and the rated power information (P_{B}), and may identify whether the rated power information (P_{A}) is greater than the rated power information (P_{B}).

When the rated power information (P_{A}) is greater than the rated power information (P_{B}), the electronic device 201 may adjust the output voltage of the external power supply device (D1) upward by a predetermined voltage (e.g., about 0.7 V) or higher or adjust the output voltage of the external power supply device (D2) upward by a predetermined voltage (e.g., about 0.7 V) or higher so as to configure a voltage difference to be generated in operation 720.

However, when the rated power information (P_{A}) is not greater than the rated power information (P_{B}), the electronic device 201 may adjust the output voltage of the external power supply device (D1) downward by a predetermined voltage (e.g., about 0.7 V) or higher or adjust the output voltage of the external power supply device (D2) upward by a predetermined voltage (e.g., about 0.7 V) or higher so as to configure a voltage difference to be generated in operation 725.

After configuring the voltage difference to be generated as described above, the electronic device 201 may connect to the external power supply device (D2) in operation 730. In operation 735, the electronic device 201 may calculate a rated power ratio between the two external power supply devices. The electronic device 201 may monitor the current amount of each connector in operation 740, and identify whether the current ratio matches or is similar to the power ratio in operation 745. If the current ratio matches or is similar to the power ratio, the operation for power adjustment may be ended. In contrast, when the current ratio does not match or is not similar to the power ratio, that is, when the current ratio is not matched to the rated power ratio within a threshold range, the electronic device 201 may adjust the output voltage of the external power supply device with low capacity upward or adjust the output voltage of the external power supply device with high capacity downward among the two connected external power supply devices so that the current ratio corresponds the power ratio within the threshold range in operation 750. In addition, the electronic device 201 may adjust the output voltage of the external power supply device with high capacity downward while adjusting the output voltage of the external power supply device with low capacity upward.

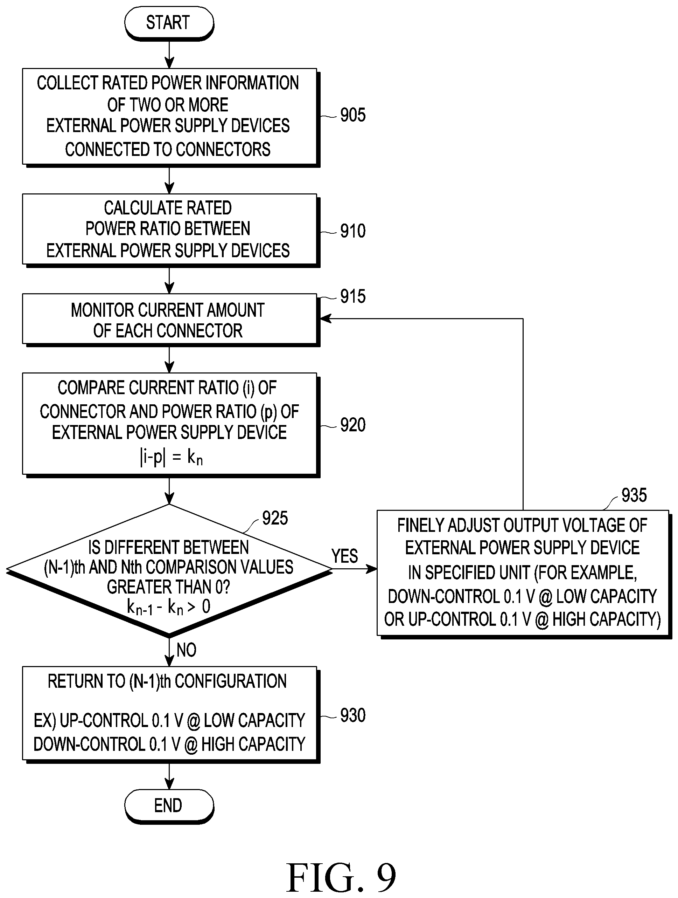

FIG. 9 is a flowchart illustrating an operation of an electronic device for adjusting an output voltage of an external power supply device in a specified unit according to an embodiment. Referring to FIG. 9, the operation method may include operations 905 to 935. Each of the operation method in FIG. 9 may be performed by an electronic device (e.g., the electronic device 101 of FIG. 1, the electronic device 201 of FIG. 2, or the electronic device 201 of FIG. 4A) or at least one processor (e.g., at least one of the processor 120 of FIG. 1, the control circuit 417 of FIG. 4A, or the processor 420 of FIG. 4A) of the electronic device. In an embodiment, at least one of operations 905 to 935 may be omitted, the order of some operations may be changed, other operations may be added, or at least two operations may be performed in parallel.

Operations 905 to 915 of FIG. 9 are the same as operations 605 to 615 of FIG. 6, and thus a detailed description thereof will be omitted.

In operation 920, the electronic device 201 may compare a current ratio (i) of a connector and a power ratio (p) of an external power supply device. Here, the difference between the current ratio (i) of the connector and the power ratio (p) of the external power supply may be referred to as Kₙ.

In operation 925, the electronic device 201 may identify whether the difference between (n-1)^{th} and n^{th} comparison values is greater than 0. For example, it may be identified whether the difference obtained by comparing Kₙ₋₁ which is the difference between the previous current ratio (i-1) of the connector and the power ratio (p) of the external power supply device and Kₙ which is the difference between the current ratio (i) of the connector and the power ratio (p) of the external power supply device is greater than 0.

When the difference between (n-1)^{th} and n^{th} comparison values is greater than 0, the electronic device 201 may finely adjust the output voltage of the external power supply device in a specified unit in operation 935. For example, the electronic device 201 may adjust the output voltage of the external power supply device with low capacity downward in a specified unit (e.g., about 0.1 V), and adjust the output voltage of the external power supply device with high capacity upward in the specified unit. After finely adjusting the output voltage of the external power supply device in the specified unit, the electronic device 201 may return to operation 915 and repeatedly perform the operation of monitoring the current amount of each connector.

FIG. 10 is a flowchart illustrating an operation of an electronic device for adjusting an output voltage of an external power supply device when a rated power amount is the same, according to an embodiment. Referring to FIG. 10, the operation method may include operations 1005 to 1025. Each of the operation method in FIG. 10 may be performed by an electronic device (e.g., the electronic device 101 of FIG. 1, the electronic device 201 of FIG. 2, or the electronic device 201 of FIG. 4A) or at least one processor (e.g., at least one of the processor 120 of FIG. 1, the control circuit 417 of FIG. 4A, or the processor 420 of FIG. 4A) of the electronic device. In an embodiment, at least one of operations 1005 to 1025 may be omitted, the order of some operations may be changed, other operations may be added, or at least two operations may be performed in parallel.

Operations 1005 to 1020 in FIG. 10 are the same as operations 605 to 620 in FIG. 6, and operations 1005 to 1015 in FIG. 10 are also the same as operations 905 to 915 in FIG. 9, and thus a detailed description thereof will be omitted.

In FIG. 10, it may be assumed that first power information of the first external power supply device and second power information of the second external power supply device are the same.

In operation 1005, the electronic device 201 may collect rated power information of two or more external power supply devices connected to connectors. For example, it may be assumed that, according to the collected rated power information, rated power of a first external power supply device connected to a first connector among the two or more connectors is 65 W, and rated power of a second external power supply device connected through a second connector among the two or more connectors is 65 W.

In operation 1010, the electronic device 201 may calculate a rated power ratio between the external power supply devices. For example, a rated power ratio between the external power supply devices may be 65 W/65 W = 1.

In operation 1015, the electronic device 201 may monitor a current amount of each connector.

In operation 1020, the electronic device 201 may identify whether a current ratio of the connector matches or is similar to a power ratio of the external power supply device. When the current ratio of the connector matches or is similar to the power ratio of the external power supply device, the operation for adjusting the power imbalance may be ended. On the other hand, when the current ratio of the connector is not the same as or similar to the power ratio of the external power supply device, for example, when the result of comparing the current ratio of the connector and the power ratio of the external power supply device is not within the threshold range, the electronic device 201 may perform operation 1025. In operation 1025, the electronic device 201 may finely adjust the output voltage of the external power supply device in a specified unit. For example, the electronic device 201 may identify a connector having a larger current amount among a first current amount of the first connector and a second current amount of the second connector. When the connector with the large current is the first connector, the electronic device 201 may adjust the output voltage of the first external power supply device downward or adjust the output voltage of the second external power supply device upward such that the current ratio between the first current and the second current corresponds to the determined power ratio.

According to an embodiment, when two external power supply devices with different rated capacities are connected, the maximum power may be used without power restriction. According to an embodiment, even when two external power supply devices having the same rated capacity are connected, the maximum power may be used without load concentration. According to an embodiment, when a product with increased power using a USB Type-C connector is implemented, there is an advantage in that the implementation is possible without a back-to-back charger structure.

Meanwhile, although the method of controlling output voltages of two or more external power supply devices has been described in the above description, voltage imbalance may be resolved by boosting or bucking the output voltage of one of the two or more external power supply devices in order to obtain the same output voltage in the case where the output voltages of the two or more external power supply devices are different.

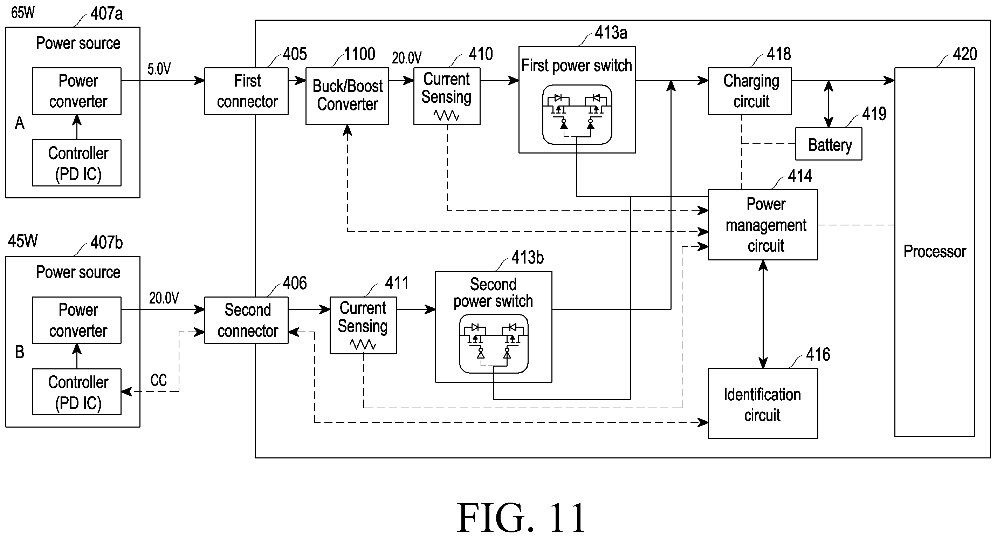

FIG. 11 is an internal block diagram illustrating an electronic device for power control using a buck-boost converter when output voltages of external power supply devices are different, according to an embodiment.

Referring to FIG. 11, the electronic device 201 may compare an output voltage of the first external power supply device 407a with an output voltage of the second external power supply device 407b. When the output voltage of the first external power supply device 407a is supplied through the first connector 405, the electronic device 201 may compare a current amount of the first external connector 405 and a current amount of the second external connector 406. For example, in a state in which the first external power supply device 407a (e.g., external power supply device of 65 W) is coupled to the first connector 405 and the second external power supply device 407b (e.g., external power supply device of 45 W) is coupled to the second connector 406, the output voltages may be different from each other. In an embodiment, a buck-boost converter 1100 may be used for step-down or step-up. To this end, the buck-boost converter 1100 may be connected in series with an output terminal of the first connector 405. For example, when the output voltage of the first external power supply device 407a is 5.0 V and the output voltage of the second external power supply device 407b is 20.0 V, the voltage of the first connector 405 may be boosted to 20.0 V through the buck-boost converter 1100, and thus, power balance may be achieved and the stable operation may be possible.

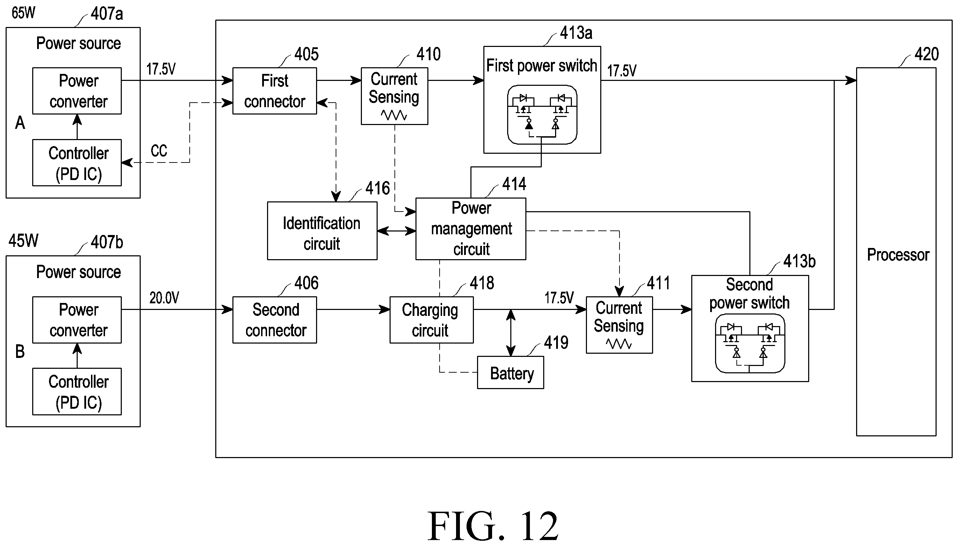

FIG. 12 is an internal block diagram illustrating an electronic device for power control when power is supplied from an external power supply device in different ways according to an embodiment.

In FIG. 12, in a state in which an external power supply device with first rated power supplied through the charging circuit 418 is coupled, an operation in coupling with an external power supply device with second rated power supplied without passing through the charging circuit 418 (or directly supplied) is illustrated.

Referring to FIG. 12, when the output voltage of the first external power supply device 407a is 17.5 V and the output voltage of the second external power supply device 407b is 20.0 V, the charging circuit 418 may be connected in series to an output terminal of the second connector 406, and power may be provided to the battery 419 at 17.5 V under the control of the control circuit (e.g., the power management circuit 414).

According to an embodiment, when the external power supply device is connected through two or more connectors, current amounts of the connectors may be monitored and, based on the monitored current amounts, power may be controlled so that the power from the external power supply device is supplied maximally. Therefore, even if imbalance of power supplied to the electronic device occurs according to the degree of voltage imbalance formed in the connector due to a difference in the output voltage between external power supply devices having different rated capacities, the maximum power may be stably provided. In addition, according to an embodiment, it is possible to resolve power imbalance occurring when external power supply devices with the same rated capacity are connected, and to enable stable power supply while maximizing power.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a computer-readable storage medium storing at least one instruction is provided. The at least one instruction may cause, when executed by at least one processor 120 or 420 of an electronic device 101 or 201, the electronic device to perform at least one operation. The at least one operation may include, when a connection of a first external power supply device is detected through a first connector 405 to which the first external power supply device can be connected, identifying first power information of the first external power supply device.

According to an embodiment, the at least one operation may include performing control to supply power at a first voltage through the first connector by the first external power supply device, based on the first power information.

According to an embodiment, the at least one operation may include, when a connection of a second external power supply device is detected through a second connector 406 to which the second external power supply device can be connected while the power is supplied at the first voltage through the first connector, identifying second power information of the second external power supply device.

According to an embodiment, the at least one operation may include determining a power ratio between the first external power supply device and the second power supply device, based on the first power information and the second power information.

According to an embodiment, the at least one operation may include adjusting an output voltage of at least one of the first external power supply device and the second external power supply device such that a ratio between a first power amount supplied from the first external power supply device and a second power amount supplied from the second external power supply device corresponds to the determined power ratio.

## Claims

1. An electronic device (101, 201) comprising:
a battery (189, 419);
a first connector (405) to which a first external power supply device is connectable;
a second connector (406) to which a second external power supply device is connectable;
a charging circuit (418) configured to supply, to the battery, power received using at least one of the first connector and the second connector; and
a control circuit (120, 414, 420),
wherein the control circuit is configured to:
in case that a connection of the first external power supply device is detected through the first connector, identify first power information of the first external power supply device;
at least based on the first power informaiton, control the first external power supply device to supply power to the charging circuit at a first voltage through the first connector;
in case that a connection of the second external power supply device is detected through the second connector while the power is supplied at the first voltage through the first connector, identify second power information of the second external power supply device;
based on the first power information and the second power information, determine a power ratio between the first external power supply device and the second power supply device; and
adjust an output voltage of at least one of the first external power supply device and the second external power supply device such that a ratio between a first power amount supplied from the first external power supply device and a second power amount supplied from the second external power supply device corresponds to the determined power ratio.

2. The electronic device of claim 1, wherein the control circuit is configured to:
monitor a first current amount of the first connector and a second current amount of the second connector; and
based on the first current amount and the second current amount, determine the ratio between the first power amount supplied from the first external power supply device and the second power amount supplied from the second external power supply device.

3. The electronic device of claim 1 or 2, wherein the control circuit is configured to:
determine a current ratio between the first current amount and the second current amount;
identify whether the current ratio between the first current amount and the second current amount corresponds to the determined power ratio within a threshold range; and
based on identifying that the current ratio between the first current amount and the second current amount does not correspond to the determined power ratio within the threshold range, adjust the output voltage of at least one of the first external power supply device and the second external power supply device such that the current ratio between the first current amount and the second current amount corresponds to the determined power ratio.

4. The electronic device of one of claims 1 to 3, wherein the control circuit is configured to, based on identifying that the current ratio between the first current amount and the second current amount corresponds to the determined power ratio within the threshold range, stop adjusting the output voltage of at least one of the first external power supply device and the second external power supply device.

5. The electronic device of one of claims 1 to 4, wherein the control circuit is configured to adjust the output voltage of at least one of the first external power supply device and the second external power supply device by a specified unit.

6. The electronic device of one of claims 1 to 5, wherein the control circuit is configured to:
compare the first power information and the second power information; and
in case that the first power information and the second power information are different, adjust the output voltage of the first external power supply device upward by the specified unit or adjust the output voltage of the second external power supply device downward by the specified unit such that the ratio between the first power amount supplied from the first external power supply device and the second power amount supplied from the second external power supply device corresponds to the determined power ratio.

7. The electronic device of one of claims 1 to 6, wherein the control circuit is configured to:
in case that the first power information and the second power information are identical, identify a connector having a larger current amount among the first current amount of the first connector and the second current amount of the second connector; and
in case that the connector having the larger current amount is the first connector, adjust the output voltage of the first external power supply device downward or adjust the output voltage of the second external power supply device upward such that the current ratio between the first current amount and the second current amount corresponds to the determined power ratio.

8. The electronic device of one of claims 1 to 7, wherein the control circuit is configured to:
after adjusting the output voltage of at least one of the first external power supply device and the second external power supply device by the specified unit, monitor a third current amount of the first connector and a fourth current amount of the second connector;
determine a current ratio between the third current amount and the fourth current amount;
identify whether the current ratio between the third current amount and the fourth current amount corresponds to the determined power ratio within a threshold range; and
based on identifying that the current ratio between the third current amount and the fourth current amount corresponds to the determined power ratio within the threshold range, maintain the adjusted at least one output voltage.

9. The electronic device of one of claims 1 to 8, wherein the control circuit is configured to, based on identifying that the current ratio between the third current amount and the fourth current amount does not correspond to the determined power ratio within the threshold range, adjust the output voltage of at least one of the first external power supply device and the second external power supply device by the specified unit.

10. The electronic device of one of claims 1 to 9, wherein the control circuit is configured to:
compare the first power information and the second power information;
in case that the first power information is larger than the second power information, identify whether the first power information is larger than twice the second power information;
in case that the first power information is larger than twice the second power information, adjust the output voltage of the first external power supply device upward by a predetermined voltage or adjust the output voltage of the second external power supply device downward by the predetermined voltage; and then
monitor the first current amount of the first connector and the second current amount of the second connector.

11. A method of controlling power by an electronic device (101, 201), the method comprising:
in case that a connection of a first external power supply device is detected through a first connector (405) to which the first external power supply device is connectable, identifying first power information of the first external power supply device;
at least based on the first power information, controlling the first external power supply device to supply power at a first voltage through the first connector;
in case that a connection of a second external power supply device is detected through a second connector (406) to which the second external power supply device is connectable while the power is supplied at the first voltage through the first connector, identifying second power information of the second external power supply device;
based on the first power information and the second power information, determining a power ratio between the first external power supply device and the second power supply device; and
adjusting an output voltage of at least one of the first external power supply device and the second external power supply device such that a ratio between a first power amount supplied from the first external power supply device and a second power amount supplied from the second external power supply device corresponds to the determined power ratio.

12. The method of claim 11, comprising:
monitoring a first current amount of the first connector and a second current amount of the second connector; and
based on the first current amount and the second current amount, determining the ratio between the first power amount supplied from the first external power supply device and the second power amount supplied from the second external power supply device.

13. The method of claim 11 or 12, comprising:
determining a current ratio between the first current amount and the second current amount;
identifying whether the current ratio between the first current amount and the second current amount corresponds to the determined power ratio within a threshold range; and
based on identifying that the current ratio between the first current amount and the second current amount does not correspond to the determined power ratio within the threshold range, adjusting the output voltage of at least one of the first external power supply device and the second external power supply device such that the current ratio between the first current amount and the second current amount corresponds to the determined power ratio.

14. The method of one of claims 11 to 13, comprising, based on identifying that the current ratio between the first current amount and the second current amount corresponds to the determined power ratio within the threshold range, stopping adjusting the output voltage of at least one of the first external power supply device and the second external power supply device,
wherein the output voltage of at least one of the first external power supply device and the second external power supply device is adjusted by a specified unit.

15. A computer-readable storage medium storing at least one instruction that, when executed by at least one processor (120, 420) of an electronic device (101, 201), causes the electronic device to perform at least one operation, the at least one operation comprising:
in case that a connection of a first external power supply device is detected through a first connector (405) to which the first external power supply device is connectable, identifying first power information of the first external power supply device;
based on at least the first power information, controlling the first external power supply device to supply power at a first voltage through the first connector;
in case that a connection of a second external power supply device is detected through a second connector (406) to which the second external power supply device is connectable while the power is supplied at the first voltage through the first connector, identifying second power information of the second external power supply device;
based on the first power information and the second power information, determining a power ratio between the first external power supply device and the second power supply device; and
adjusting an output voltage of at least one of the first external power supply device and the second external power supply device such that a ratio between a first power amount supplied from the first external power supply device and a second power amount supplied from the second external power supply device corresponds to the determined power ratio.
